# DEMANDE DE BREVET EUROPEEN

(11) **EP 3 246 224 A1**
(43) Date de publication de la demande: **22.11.2017**
(21) Numéro de dépôt: 17172152.5
(22) Date de dépôt: 22.05.2017
(51) Int. Cl.: B62B 1/22, B62B 1/24

(54) **BROUETTE À DÉVERSEMENT LATÉRAL ET PROCÉDÉ DE MISE EN OEUVRE**

(30) Priorité: 20.05.2016 FR 1654541
(71) Demandeur: DEFAY TP, 43700 Saint Germain Laprade (FR)
(72) Inventeur: DEFAY, Dominique, 43260 SAINT-PIERRE-EYNAC (FR)
(74) Mandataire: Cabinet Laurent & Charras

(57) **Abrégé**

La présente invention concerne une brouette (1) à déversement latéral, comprenant une partie inférieure (2) et une partie supérieure (3) montées en liaison pivot autour d'un axe de rotation (A1); la partie inférieure (2) comportant deux roues (10) prévues pour rouler au sol et une base (20) définissant l'axe de rotation (A1); la partie supérieure (3) comportant une armature (30) et un réceptacle (40) prévu pour recevoir une charge (4) ; caractérisée en ce que les roues (10) sont inclinées l'une vers l'autre, en étant écartées au niveau du sol ; et en ce que la partie supérieure (3) est inclinable par rapport à la partie inférieure (2), de chaque côté de la brouette (1), selon un angle d'inclinaison (α1) compris entre 0 et au moins 30 degrés. L'invention concerne également un procédé de mise en oeuvre d'une telle brouette (1).

## Description

La présente invention concerne une brouette à déversement latéral. L'invention concerne également un procédé de mise en oeuvre d'une telle brouette. Le domaine de l'invention est celui des équipements de transport d'une charge, adaptés pour être utilisés en extérieur, par exemple sur un chantier ou dans un jardin.

De manière classique, une brouette comprend une armature munie d'une roue centrale et un bac monté sur l'armature. Le bac peut recevoir différentes charges à transporter, par exemple des matériaux tels que du gravier ou de la terre. L'armature comporte des pieds prévus pour reposer au sol lorsque la brouette est stationnaire. L'armature comporte également des bras prévus pour maniement par un utilisateur, afin de lever les pieds au-dessus du sol et déplacer la brouette.

Lorsque l'utilisateur de la brouette souhaite verser la charge hors du bac, différentes solutions sont envisageables.

Selon une première solution, l'utilisateur bascule la brouette vers l'avant, en appui sur la roue centrale, de sorte que la charge est déversée par l'avant du bac. Il est difficile pour l'utilisateur d'évaluer la quantité de matériaux ainsi déversée. En outre, lorsque les matériaux doivent être répartis le long d'une bordure, l'utilisateur est obligé de procéder en plusieurs versements.

Selon une deuxième solution, l'utilisateur bascule la brouette sur le côté, en appui sur la roue centrale, de sorte que la charge est déversée par le côté du bac. L'utilisateur peut plus facilement évaluer la quantité de matériaux ainsi déversée, par exemple le long d'une bordure. Cependant, il existe un risque de renversement latéral de la brouette et de la charge.

WO 2001 074 458 A1 décrit une brouette comprenant une partie inférieure et une partie supérieure montées en liaison pivot l'une par rapport à l'autre. La partie inférieure comporte deux roues parallèles, et une base incluant un essieu droit supportant les roues. La partie supérieure comporte une armature incluant des pieds prévus pour reposer au sol et des bras prévus pour maniement par un utilisateur. La partie supérieure comporte également un réceptacle supporté par l'armature.

Comme montré aux figures 6 et 12 de ce document, une telle brouette est prévue pour déplacement sur un sol irrégulier, présentant plusieurs niveaux de hauteur. La base et les roues sont inclinées pour s'adapter à la forme du sol, tandis que la partie supérieure est maintenue droite.

En revanche, comme montré aux figures 4, 5, 10 et 11 de ce document, l'inclinaison de la partie supérieure par rapport à la partie inférieure est limitée à 25 degrés de part et d'autre du plan longitudinal de la brouette. Autrement dit, cette brouette n'est pas adaptée à un déversement latéral de la charge hors du bac.

Le but de la présente invention est de proposer une brouette remédiant aux inconvénients ci-dessus.

A cet effet, l'invention a pour objet une brouette à déversement latéral, comprenant une partie inférieure et une partie supérieure montées en liaison pivot autour d'un axe de rotation ; la partie inférieure comportant deux roues prévues pour rouler au sol et une base définissant l'axe de rotation; la partie supérieure comportant une armature et un réceptacle prévu pour recevoir une charge ; caractérisée en ce que les roues sont inclinées l'une vers l'autre, en étant écartées au niveau du sol ; et en ce que la partie supérieure est inclinable par rapport à la partie inférieure, de chaque côté de la brouette, selon un angle d'inclinaison compris entre 0 et au moins 30 degrés.

Ainsi, l'invention permet de faciliter le transport de la charge et son déchargement. L'invention permet de déverser latéralement la charge hors du réceptacle, sans risque de basculement incontrôlé de la brouette. Avantageusement, la charge peut être déversée lorsque la brouette est mobile, pas seulement lorsque la brouette est stationnaire. L'agencement des roues procure une importante stabilité au sol, sans nuire à la mobilité. De plus, l'agencement des roues, de la base et de l'armature procure suffisamment d'espace pour basculer la partie supérieure par rapport à la partie inférieure avec une amplitude importante, de chaque côté de la brouette. En outre, la mobilité relative entre les parties supérieure et inférieure permet de réduire l'encombrement de la brouette en vue de son rangement, par exemple dans un local ou un véhicule.

Selon l'invention, l'angle d'inclinaison est ajustable de part et d'autre du plan longitudinal entre 0 degré (position d'équilibre) et au moins 30 degrés (position de déversement). De préférence, pour faciliter le déversement, l'angle d'inclinaison est ajustable sur une plus grande plage angulaire.

La brouette selon l'invention peut être utilisée par des professionnels ou des particuliers, par exemple pour des travaux de construction ou de jardinage.

De manière avantageuse, la brouette selon l'invention permet de réduire la pénibilité du déchargement. La charge étant équilibrée sur l'axe central, on peut aisément déverser à droite ou à gauche, doser le déversement des matériaux, vider latéralement en avançant, et maintenir le chargement horizontal dans une pente à 35%.

La brouette selon l'invention a été évaluée par un podologue, qui l'a comparé à une brouette classique mono-roue. Le podologue a pu constater des améliorations ayant des conséquences directes sur le squelette osseux, pouvant améliorer la biomécanique et corriger les troubles posturaux de l'utilisateur en statique et dynamique. En particulier, la brouette présente les avantages suivants :
- Amélioration des troubles posturaux par un meilleur maintien latéral et antéro-postérieur.
- Relâchement des tensions musculaires et amélioration de la marche.
- Augmentation de la précision du geste sans effort notable.
- Diminution des contraintes exercées sur l'ensemble articulaire et notamment discale et fémoro-patellaire (réduction des lésions lombaires et cervico-brachiales, gonalgies).
- Le déversement latéral permet la prise en charge des matériaux sans risque notable pour le porteur. Les risques de lésions par effort successif ou de chutes sont corrigés.

Selon d'autres caractéristiques avantageuses de l'invention, prises isolément ou en combinaison :
- L'angle d'inclinaison est compris entre 0 et au moins 45 degrés. En d'autres termes, la partie supérieure est inclinable par rapport à la partie inférieure selon un angle d'inclinaison ajustable entre 0 et au moins 45 degrés.
- L'angle d'inclinaison est compris entre 0 et 80 degrés. En d'autres termes, la partie supérieure est inclinable par rapport à la partie inférieure selon un angle d'inclinaison ajustable entre 0 et au plus 80 degrés.
- La base inclut un arbre longitudinal définissant l'axe de rotation.
- La base inclut un essieu supportant les roues.
- L'armature inclut des pieds prévus pour reposer au sol.
- L'armature inclut des bras prévus pour maniement par un utilisateur.
- L'armature inclut un cadre supportant le réceptacle.
- Le réceptacle est amovible par rapport à la partie inférieure, de sorte que la brouette peut être équipée sélectivement avec différents réceptacles.
- Le réceptacle et l'armature sont solidaires et amovibles par rapport à la base.
- Le réceptacle est soudé à l'armature.
- Le réceptacle est amovible par rapport à l'armature.
- Le réceptacle est clipsé ou boulonné sur l'armature.
- La partie supérieure a une position longitudinale réglable le long de l'axe de rotation par rapport à la partie inférieure.
- La brouette est pourvue d'un dispositif de blocage en translation, le long de l'axe de rotation, de la partie supérieure par rapport à la partie inférieure.
- L'arbre longitudinal est pourvu d'un dispositif de blocage en translation, le long de l'axe de rotation, de l'armature par rapport à la base.
- Le dispositif de blocage en translation est constitué par deux colliers de serrage agencés sur a base, autour de l'axe de rotation, de part et d'autre d'une partie de l'armature.
- La brouette est pourvue d'un dispositif de blocage en rotation, autour l'axe de rotation, de la partie supérieure par rapport à la partie inférieure.
- La brouette est pourvue d'un dispositif de rappel élastique de la partie supérieure par rapport à la partie inférieure.
- Le dispositif de rappel élastique comprend deux ressorts disposés de chaque côté de la brouette, avec une extrémité accrochée à la base et une extrémité accrochée à l'armature.
- La base comprend un arbre longitudinal définissant l'axe de rotation, un essieu supportant les roues, et un profilé arqué reliant l'arbre longitudinal à l'essieu.
- L'arbre longitudinal et le profilé arqué forment une seule pièce.
- La base est pourvue de moyens amovibles de blocage transversal des roues, de sorte que les roues peuvent être retournées ou que la brouette peut être équipée sélectivement avec différentes roues, en retirant temporairement ces moyens.

L'invention a également pour objet un procédé de mise en oeuvre d'une brouette à déversement tel que mentionnée ci-dessus, caractérisé en ce que la partie supérieure est inclinable par rapport à la partie inférieure, de chaque côté de la brouette, selon un angle d'inclinaison compris entre 0 et au moins 30 degrés :
- dans une configuration stationnaire, où les roues reposent sur le sol ;
- dans une configuration mobile, où les roues roulent sur le sol ; et
- dans une configuration de rangement, où les roues et le réceptacle reposent au sol.

L'invention sera mieux comprise à la lecture de la description qui va suivre, donnée uniquement à titre d'exemple non limitatif et faite en référence aux dessins annexés sur lesquels :
- la figure 1 est une vue en perspective d'une brouette conforme à l'invention, montrée selon un angle avant-gauche ;
- la figure 2 est une autre vue en perspective de la brouette, montrée par l'avant pendant le déversement de matériaux hors du bac ;
- la figure 3 est une vue en élévation sur l'avant de la brouette ;
- la figure 4 est une vue de dessous de la brouette reposant au sol sur son côté avant ;
- les figures 5 et 6 sont des vue de détail en perspective, montrant la liaison entre la partie inférieure et la partie supérieure de la brouette ;
- la figure 7 est une vue en élévation sur l'avant, montrant uniquement la partie inférieure de la brouette ;
- la figure 8 est une vue en élévation montrant la partie inférieure désassemblée, avec une seule roue ;
- la figure 9 est une représentation schématique, lorsque la partie supérieure est inclinée de 45 degrés par rapport à la partie inférieure ;
- la figure 10 est une représentation schématique, lorsque la partie supérieure est inclinée de 80 degrés par rapport à la partie inférieure ;
- la figure 11 est une vue analogue à la figure 1, montrant une brouette conforme à un deuxième mode de réalisation de l'invention ;
- la figure 12 est une vue analogue à la figure 1, montrant une brouette conforme à un troisième mode de réalisation de l'invention ;
- la figure 13 est une vue en perspective, montrant une brouette conforme à un quatrième mode de réalisation de l'invention, selon un angle avant-droit ;
- la figure 14 est une vue analogue à la figure 13, pendant le déversement de matériaux hors du bac ;
- les figures 15 et 16 sont des vues avant selon les flèches XV et XVI aux figures 13 et 14 ; et
- les figures 17 et 18 sont des vues de côté selon les flèches XVII et XVIII aux figures 13 et 14.

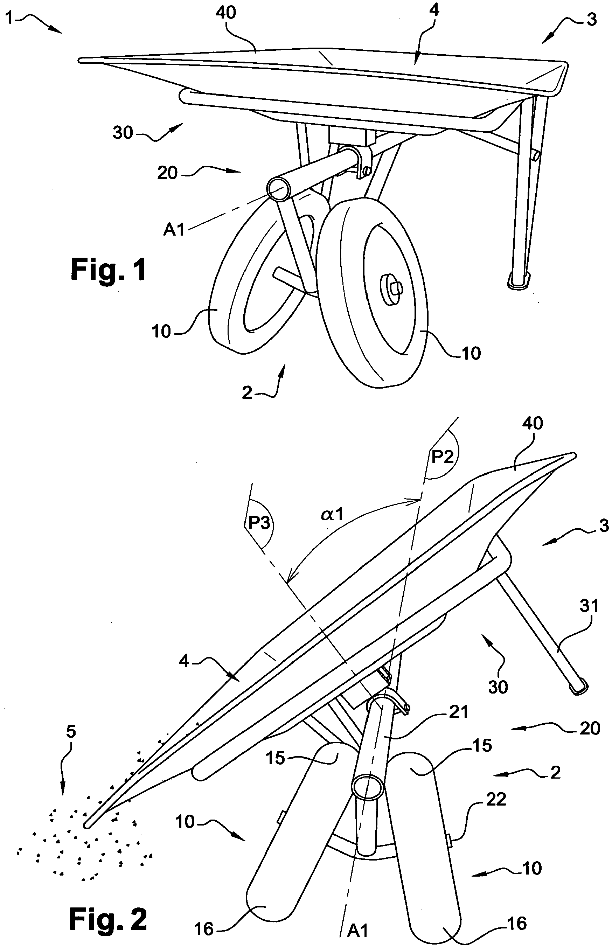

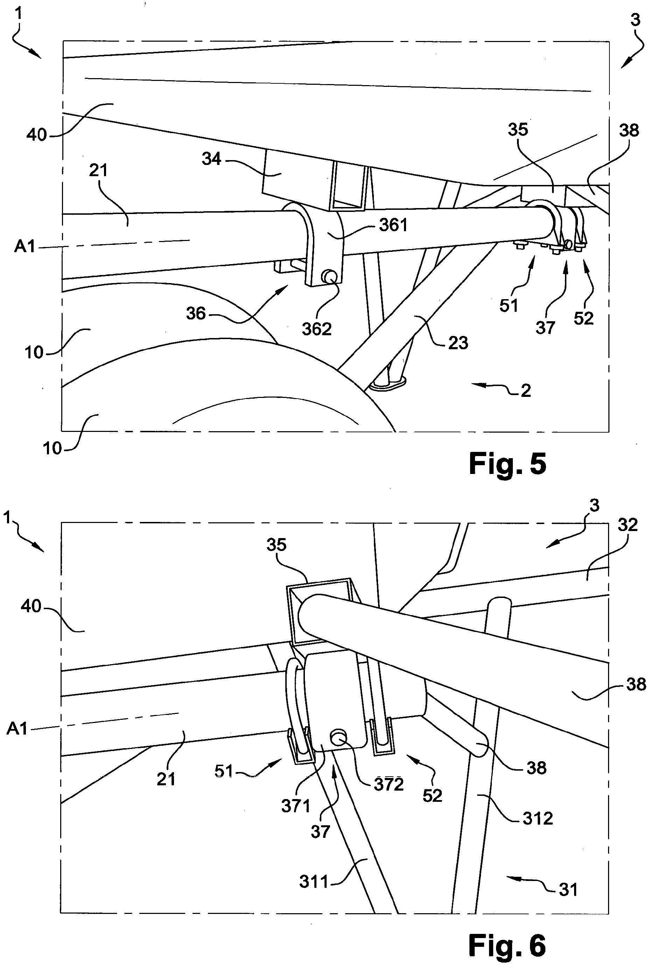

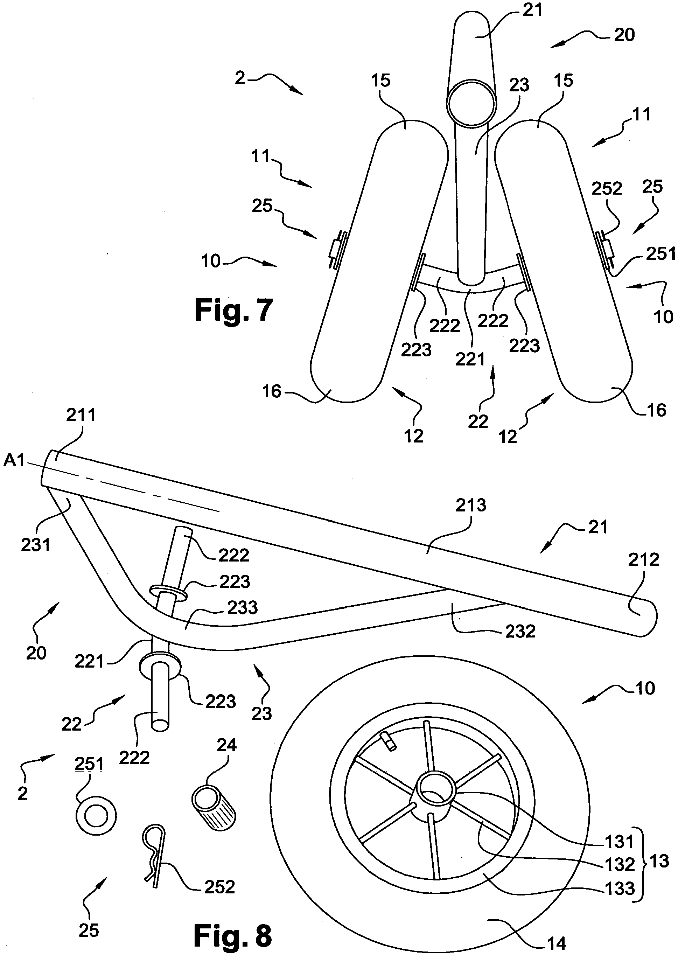

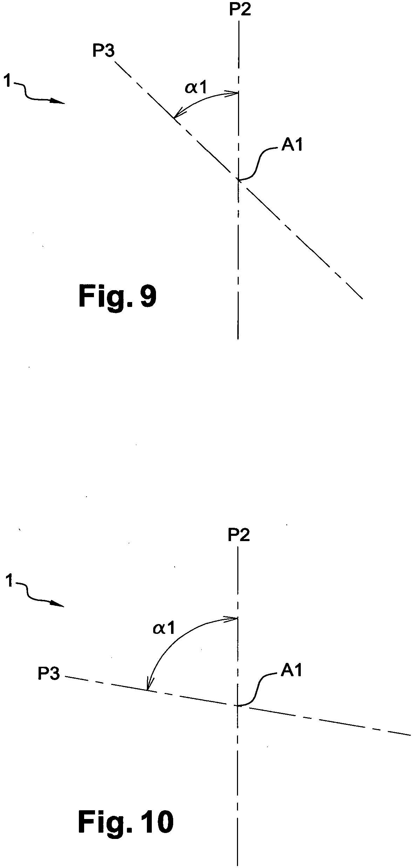

Sur les figures 1 à 10 est représentée une brouette 1 à déversement latéral conforme à l'invention.

La brouette 1 comprend une partie inférieure 2 et une partie supérieure 3, montées en liaison pivot autour d'un axe de rotation A1. La partie inférieure 2 comporte deux roues 10 et une base 20. La partie supérieure 3 comporte une armature 30 et un bac 40 conçu pour recevoir une charge 4, par exemple du gravier 5 comme sur la figure 2.

La partie inférieure 2 présente un plan de référence médian P2, tandis que la partie supérieure 3 présente un plan de référence médian P3. L'axe de rotation A1 est situé à l'intersection des plans P2 et P3. Le plan P2 constitue un plan de symétrie pour la partie inférieure 2, tandis que le plan P3 constitue un plan de symétrie pour la partie supérieure 3.

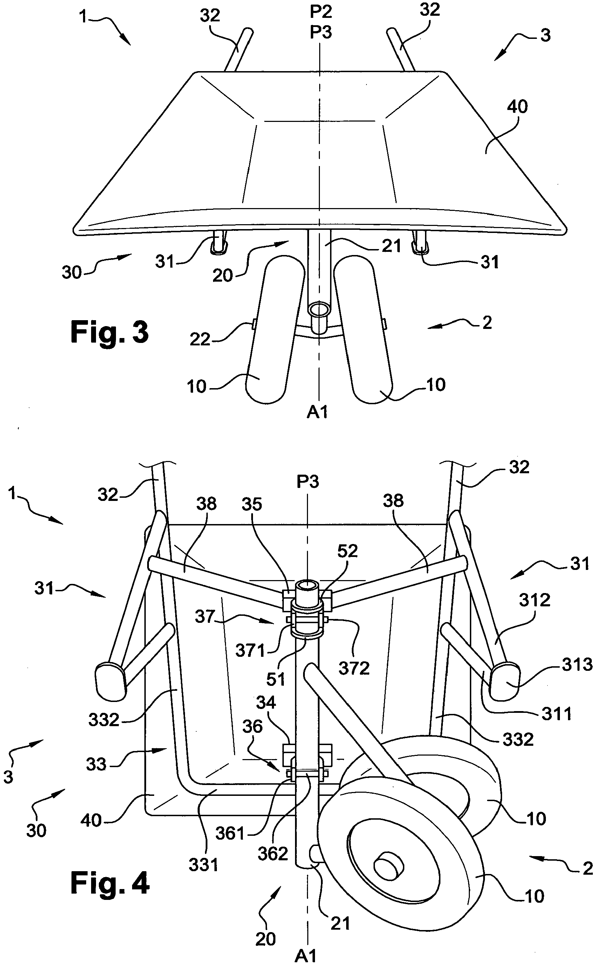

Les plans P2 et P3 sont superposés lorsque la brouette 1 se trouve dans une configuration de repos, comme sur les figures 1 et 3. Dans ce cas, les plans P2 et P3 sont longitudinaux et verticaux, et constituent un plan de symétrie de la brouette 1.

Le plan P3 est inclinable par rapport au plan P2, par pivotement autour de l'axe A1, comme sur les figures 2, 4, 9 et 10. Dans ce cas, le plan P2 est longitudinal et vertical, tandis que le plan P3 est longitudinal mais non vertical.

Les roues 10 sont prévues pour rouler au sol afin de déplacer la brouette 1. En particulier, les roues 10 sont adaptées pour rouler sur un sol irrégulier, en extérieur, tel que sur un chantier de construction ou dans un jardin.

Chaque roue 10 comporte une face externe 11 tournée vers l'extérieur et une face interne 12 tournée vers la base 20.

Chaque roue 10 comporte une partie centrale 13 et une bande de roulement périphérique 14. La partie centrale 13 comprend un moyeu 131, des rayons 132 et une jante 133. Le moyeu 131 est monté sur la base 20, tandis que la jante 133 supporte la bande de roulement 14.

Chaque roue 10 comporte un bord supérieur 15 et un bord inférieur 16. Les roues 10 sont inclinées l'une vers l'autre, avec des bords supérieurs 15 rapprochés et des bords inférieurs 16 écartés. Sur la bande de roulement 14, les bords inférieurs 16 sont destinés à reposer au sol lorsque la brouette 1 est stationnaire ou en mouvement.

Lorsque l'utilisateur décharge vers l'avant, la brouette 1 s'immobilise automatiquement compte tenu de l'agencement des roues inclinées. Cela évite que l'utilisateur puisse être entrainé avec la charge 4.

La base 20 est une structure rigide en métal, comportant un arbre longitudinal 21, un essieu transversal 22 et un profilé arqué 23. Les éléments 21-23 sont assemblés entre eux, par exemple par soudage ou brasage.

L'arbre 21 est un tube creux centré sur l'axe de rotation A1. En pratique, l'arbre 21 définit l'axe A1 de la brouette 1. L'arbre 21 s'étend entre une extrémité avant 211 et une extrémité arrière 212. On définit une partie intermédiaire 213 de l'arbre 21 entre ses extrémités 211 et 212.

L'essieu 22 est arqué, avec une partie centrale coudée 221 solidaire du profilé 23, et deux parties latérales droites 222 dirigées vers le haut. Les parties latérales 222 traversent les moyeux 131 et supportent les roues 10, de sorte que leurs bords supérieurs 15 sont plus rapprochés que leurs bords inférieurs 16. Les parties latérales 222 sont pourvues de disques 223 recevant les moyeux 131 en appui latéral. Egalement, les parties latérales 222 sont pourvues de roulements à aiguilles 25 recevant les moyeux 131 en appui radial.

Le profilé 23 relie l'arbre 21 et l'essieu 22. Le profilé 23 a une extrémité avant 231 solidaire de l'extrémité avant 211 de l'arbre 21 et une extrémité arrière 232 solidaire de la partie intermédiaire 213 de l'arbre 21, plus près de son extrémité arrière 212 que de son extrémité avant 211. Le profilé 23 a une partie intermédiaire 233 solidaire de la partie centrale 222 de l'essieu 22.

L'essieu 22 est pourvu de moyens 25 amovibles de blocage transversal des roues 10. Ainsi, les roues 10 peuvent être retournées en inversant les faces 11 et 12 (pour une meilleure répartition de l'usure), ou bien la brouette 1 peut être équipée avec des roues différentes (en fonction de l'application visée, de la nature du terrain ou des préférences de l'utilisateur), en retirant temporairement ces moyens 25.

Sur chaque partie latérale 222 de l'essieu 22, les moyens 25 comprennent une rondelle annulaire 251 et une goupille déformable 252. La rondelle 251 vient en appui contre la face externe 11 du moyeu 131, tandis que sa face interne 12 vient en appui contre le disque 223. La goupille 252 est insérée à travers la partie latérale 222 du moyeu 22 pour bloquer en position la rondelle 251 et la roue 10.

L'armature 30 est une structure rigide en métal, comportant des pieds 31, des bras 32, un cadre 33, un élément de jonction avant 34, un élément de jonction arrière 35, une bride avant 36, une bride arrière 37, et deux montants transversaux 38. Les éléments 31-38 sont assemblés entre eux, par exemple par soudage ou brasage.

Les pieds 31 sont prévus pour reposer au sol lorsque la brouette 1 est stationnaire, notamment lorsqu'une charge 4 est disposée dans le bac 40. Les pieds 31 permettent alors d'assurer la stabilité de la brouette 1, conjointement avec les roues 10. Chaque pied 31 comporte deux montants verticaux 311 et 312 dont les extrémités supérieures sont solidaires du cadre 33. Chaque pied 31 comporte également un patin plat 313 destiné à venir entre appui au sol. Le patin 313 est solidaire des extrémités inférieures des montants 311 et 312.

Les bras 32 sont prévus pour le maniement de la brouette 1 par son utilisateur. Les bras 32 sont constitués par deux montants s'étendant sur l'arrière de la brouette 1, en dépassant derrière le bac 40 pour être accessibles par l'utilisateur.

Le cadre 33 est prévu pour supporter le bac 40. Le cadre 33 a une forme de U, avec un montant transversal avant 331 et deux montants longitudinaux latéraux 332. Les montants 332 se prolongent derrière le bac 40, formant ainsi les bras 32.

Les éléments 34 et 35 sont des profilés creux de section carrée, solidaires du bac 40. La liaison entre les éléments 34, 35 et le bac 40 est réalisée par soudage. En alternative, cette liaison peut être réalisée par tout moyen adapté, par exemple par clipsage ou boulonnage. L'élément 34 est solidaire de la bride 36, tandis que l'élément 35 est solidaire de la bride 37. Les liaisons entre les éléments 34, 35 et les brides 36, 37 sont également réalisées par soudage. Les éléments 34 et 35 permettent de rehausser le bac 40 et rigidifier la zone de jonction entre les parties 2 et 3.

Les brides 36 et 37 sont montées sur l'arbre 21 afin de former la liaison pivot entre la partie inférieure 2 et la partie supérieure 3. La bride 36 comporte une pièce 361 en forme de U, solidaire de l'élément 34 et disposée autour de l'arbre 21 dans sa partie intermédiaire 213, plus près de l'extrémité avant 211 que de l'extrémité arrière 212. La bride 36 comporte également un boulon 362, traversant la pièce 361 sous l'arbre 21, du côté opposé à l'élément 34. De même, la bride 37 comporte une pièce 371 en forme de U, solidaire de l'élément 35 et disposée autour de l'arbre 21 à proximité de l'extrémité arrière 212. La bride 37 comporte également un boulon 372, traversant la pièce 371 sous l'arbre 21, du côté opposé à l'élément 35. Les boulons 362 et 372 sont amovibles, de manière à pouvoir démonter la partie supérieure 3 par rapport à la partie inférieure 2. En alternative, les boulons 362 et 372 peut être remplacés par des clavettes, ou tous autres moyens adaptés.

Chaque montant 38 a une extrémité externe solidaire du montant 312 et une extrémité interne logée dans l'élément 35. Les montants 38 assurent la liaison entre les pieds 31 et l'élément 35 solidaire de la bride 36.

Le bac 40 est supporté par l'armature 30 et constitue un réceptacle pour la charge 4 de la brouette 1. Le bac 40 présente une forme concave ouverte vers le haut. Le bac 40 est positionné plus haut que sur les brouettes classiques, ce qui permet d'optimiser le déchargement latéral. Lorsque les pieds 31 reposent au sol, le bac 40 est droit, et non incliné vers l'avant ou vers l'arrière. La charge 4 est généralement répartie des deux côtés du plan P3, de sorte que son déversement peut être effectué du côté gauche ou droit de la brouette 1.

De préférence, le bac 40 est amovible par rapport à la partie inférieure 2. Ainsi, la brouette 1 peut être équipée sélectivement avec différents réceptacles, en fonction de l'application visée.

Sur l'exemple des figures 1 à 10, la partie supérieure 3 est inclinable par rapport à la partie inférieure 2, de part et d'autre du plan P2, selon un angle d'inclinaison α1 compris entre 0 et 80 degrés. Autrement dit, l'angle d'inclinaison α1 est ajustable entre 0 et 80 degrés de chaque côté du plan P2.

Ainsi, la brouette 1 permet de déverser latéralement la charge 4 hors du bac 40, sans risque de basculement incontrôlé. A titre d'exemple, la figure 2 montre des graviers 5 déversés hors du bac 40. Avantageusement, ce déversement peut être effectué lorsque la brouette 1 est en mouvement, et pas uniquement lorsque la brouette 1 est stationnaire.

L'agencement des roues 10 procure une importante stabilité au sol, sans nuire à la mobilité de la brouette 1. De plus, l'agencement des roues 10 et de l'armature 30 procure suffisamment d'espace pour basculer la partie supérieure 3 par rapport à la partie inférieure 2 avec une amplitude importante, de chaque côté de la brouette 1.

L'inclinaison permet également de faire avancer la brouette 1 sur un sol irrégulier, tout en maintenant le bac 40 en position horizontale.

De manière avantageuse, la partie supérieure 3 est inclinable par rapport à la partie inférieure 2 dans différentes configurations de la brouette 1, à savoir :
- une configuration stationnaire, où les roues 10 reposent sur le sol et les pieds 31 sont levés au-dessus du sol ;
- une configuration mobile, où les roues 10 roulent sur le sol et les pieds 31 sont levés au-dessus du sol ; et
- une configuration de rangement, où les roues 10 et le bac 40 reposent au sol, comme sur la figure 4.

Ainsi, la brouette 1 offre une plus grande polyvalence et un meilleur confort d'utilisation, en comparaison des brouettes permettant un déversement de la charge uniquement en configuration stationnaire.

La brouette 1 est également pourvue d'un dispositif 50 de blocage en translation, suivant l'axe A1, de la partie supérieure 3 par rapport à la partie inférieure 2. Plus précisément, l'arbre longitudinal 21 est pourvu d'un dispositif 50 de blocage en translation, suivant l'axe A1, de l'armature 30 par rapport à la base 20.

Sur l'exemple des figures 4 à 6, le dispositif 50 est constitué par deux colliers de serrage 51 et 52 agencés sur l'arbre longitudinal 21, de part et d'autre de l'élément 35 et de la bride 36. Les colliers de serrage 51 et 52 sont amovibles.

En variante, les colliers de serrage 51 et 52 peuvent être agencés sur l'arbre longitudinal 21, de part et d'autre de l'élément 36 et de la bride 37.

Selon une autre variante, le dispositif 50 peut comporter deux colliers de serrage agencés de part et d'autre des éléments 34 et 35, ainsi que deux colliers de serrage agencés de part et d'autre des éléments 36 et 37.

Selon une autre variante, le dispositif 50 peut être constitué par des moyens autres que les colliers de serrage, par exemple des goupilles positionnées dans des perçages ménagés (de préférence à intervalles réguliers) sur l'arbre 21.

Lorsque les colliers de serrage 51, 52, et les boulons 362, 372, sont desserrés, la position longitudinale de la partie supérieure 3 peut être réglée le long de l'axe de rotation A1 par rapport à la partie inférieure 2. En particulier, les bras 32 et le bac 40 peuvent être décalés vers l'arrière ou vers l'avant, par rapport aux roues 10 constituant les points d'appui de la brouette 1 au sol, pour un meilleur confort d'utilisation.

Optionnellement, la brouette 1 peut être pourvue d'un dispositif de blocage en rotation, autour l'axe de rotation A1, de la partie supérieure 3 par rapport à la partie inférieure 2.

A titre d'exemple non limitatif, ce dispositif peut être constitué par une manette agencé sur l'un des bras 32 et des mâchoires de frein montées sous le bac 40, de part et d'autre de l'arbre 21. L'actionnement de la manette resserre les mâchoires sur l'arbre 21, de sorte que la partie supérieure 3 ne peut plus pivoter par rapport à la partie inférieure 2.

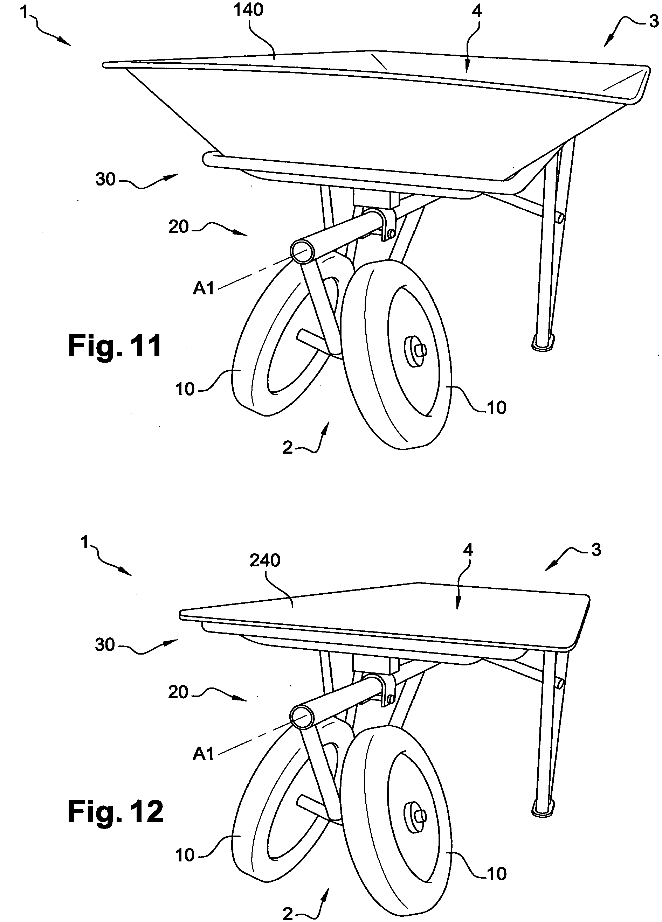

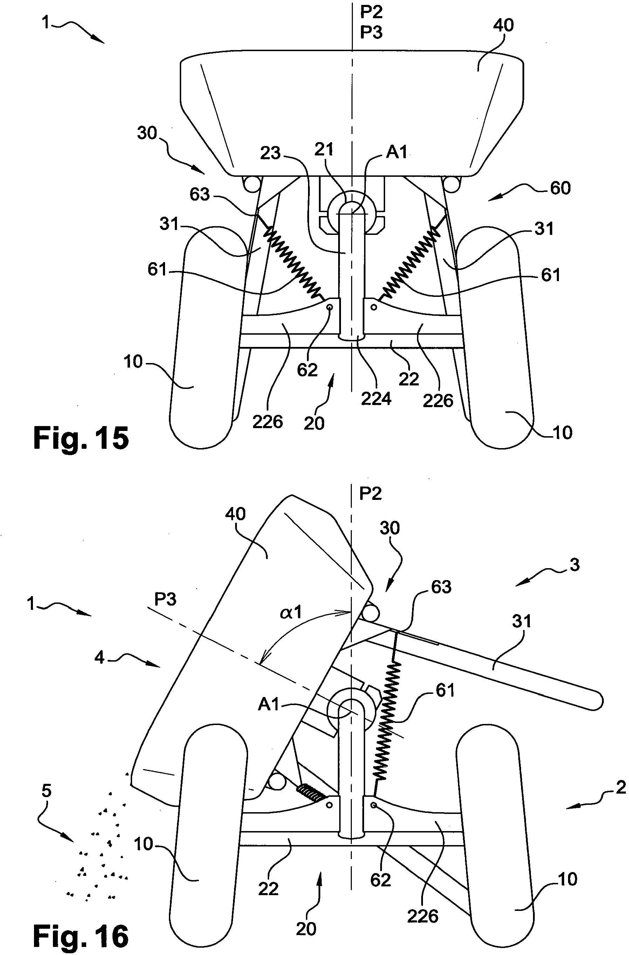

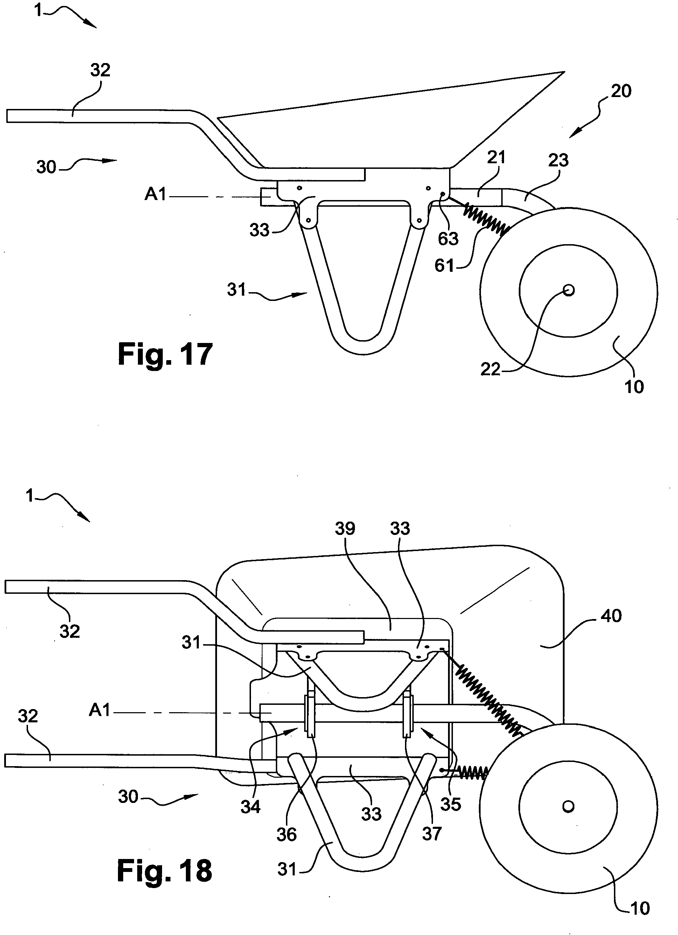

D'autres modes de réalisation d'une brouette 1 conforme à l'invention sont montrés aux figures 11 à 18. Certains éléments constitutifs de ces brouettes 1 sont comparables à ceux du premier mode de réalisation décrit plus haut et, dans un but de simplification, portent les mêmes références numériques.

Sur la figure 11, la brouette 1 comporte un bac 140 de dimensions supérieures au bac 40, ce qui permet de transporter une charge 4 plus important.

Sur la figure 12, la brouette 1 comporte un plateau 240, c'est-à-dire un réceptacle de forme plane. Un tel plateau 240 est intéressant pour certaines applications particulières, notamment dans le domaine du jardinage.

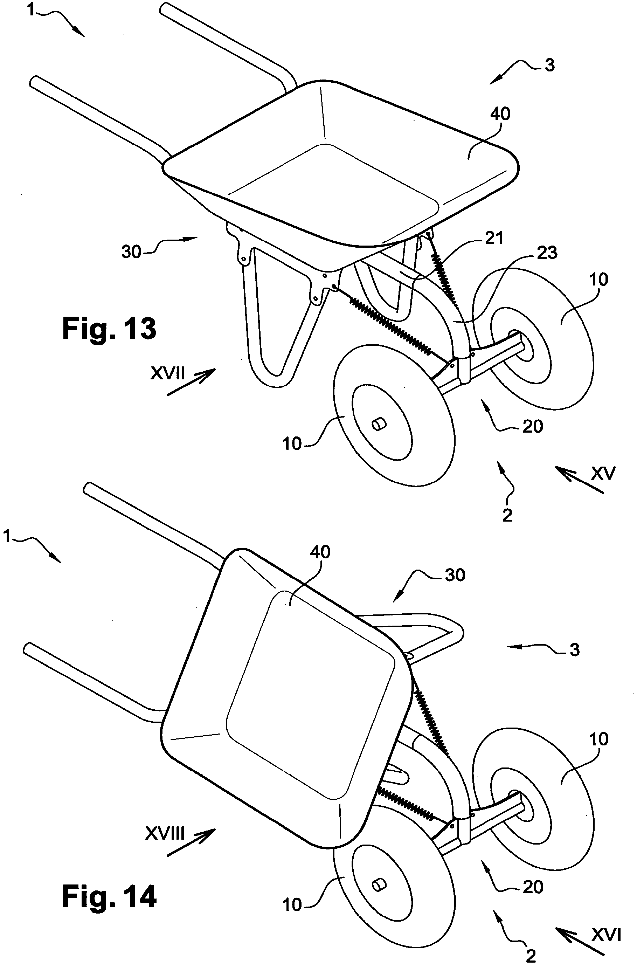

Sur les figures 13 à 18, la brouette 1 présente plusieurs différences structurelles, mais un fonctionnement comparable au premier mode de réalisation. En outre, la brouette 1 comprend un système 60 de rappel élastique.

L'arbre longitudinal 21 et le profilé arqué 23 sont formés d'une seule pièce. L'essieu 22 comporte un manchon 224 de réception du profilé 23. L'essieu 22 comporte des nervures supérieures 226, formées de part et d'autre du manchon 224.

L'armature 30 comporte des pieds 31, des bras 32, des montants latéraux 33, un élément de jonction avant 34, un élément de jonction arrière 35, une bride avant 36, une bride arrière 37, et une plaque de fixation 39. Les éléments 31-35 sont fixées du côté inférieur de la plaque 39, tandis que le réceptacle 40 est fixé du côté supérieur de la plaque 39.

Le système 60 comprend deux ressorts 61 disposés entre la base 20 et l'armature 30, de chaque côté de la brouette 1. Chaque ressort 61 comporte une extrémité inférieure 62 accrochée à une nervure 226 près du manchon 224, et une extrémité supérieure 63 accrochée en partie avant d'un des montants 33.

Lorsque le réceptacle 40 est incliné sur un côté, le ressort 61 situé du côté opposé est mis sous tension. Ainsi, le système 60 empêche le renversement du réceptacle 40 facilite son retour en position centrale.

Par ailleurs, la brouette 1 peut être conformée différemment des figures 1 à 18 sans sortir du cadre de l'invention. En particulier, les roues 10, la base 20, l'armature 30 et le réceptacle 40 peuvent être de tous types adaptés à l'application visée.

En outre, les caractéristiques techniques des différents modes de réalisation et variantes mentionnés ci-dessus peuvent être, en totalité ou pour certaines d'entre elles, combinées entre elles. Ainsi, la brouette 1 peut être adaptée en termes de coût, d'ergonomie, de fonctionnalités et de performance.

## Revendications

1. Brouette (1) à déversement latéral, comprenant une partie inférieure (2) et une partie supérieure (3) montées en liaison pivot autour d'un axe de rotation (A1) ; la partie inférieure (2) comportant deux roues (10) prévues pour rouler au sol et une base (20) définissant l'axe de rotation (A1) ; la partie supérieure (3) comportant une armature (30) et un réceptacle (40 ; 140 ; 240) prévu pour recevoir une charge (4) ; **caractérisée en ce que** les roues (10) sont inclinées l'une vers l'autre, en étant écartées au niveau du sol ; et **en ce que** la partie supérieure (3) est inclinable par rapport à la partie inférieure (2), de chaque côté de la brouette (1), selon un angle d'inclinaison (α1) compris entre 0 et au moins 30 degrés.

2. Brouette (1) à déversement latéral selon la revendication 1, **caractérisée en ce que** l'angle d'inclinaison (α1) est compris entre 0 et au moins 45 degrés.

3. Brouette (1) à déversement latéral selon l'une des revendications précédentes, **caractérisée en ce que** l'angle d'inclinaison (α1) est compris entre 0 et 80 degrés.

4. Brouette (1) à déversement latéral selon l'une des revendications précédentes, **caractérisée en ce que** le réceptacle (40 ; 140 ; 240) est amovible par rapport à la partie inférieure (2), de sorte que la brouette (1) peut être équipée sélectivement avec différents réceptacles.

5. Brouette (1) à déversement latéral selon l'une des revendications précédentes, **caractérisée en ce que** la partie supérieure (3) a une position longitudinale réglable le long de l'axe de rotation (A1) par rapport à la partie inférieure (2).

6. Brouette (1) à déversement latéral selon l'une des revendications précédentes, **caractérisée en ce qu'**elle est pourvue d'un dispositif (50) de blocage en translation, le long de l'axe de rotation (A1), de la partie supérieure (3) par rapport à la partie inférieure (2).

7. Brouette (1) à déversement latéral selon la revendication 6, **caractérisée en ce que** le dispositif (50) de blocage en translation est constitué par deux colliers de serrage (51, 52) agencés sur la base (20), autour de l'axe de rotation (A1), de part et d'autre d'une partie (35, 36) de l'armature (30).

8. Brouette (1) à déversement latéral selon l'une des revendications précédentes, **caractérisée en ce qu'**elle est pourvue d'un dispositif de blocage en rotation, autour l'axe de rotation (A1), de la partie supérieure (3) par rapport à la partie inférieure (2).

9. Brouette (1) à déversement latéral selon l'une des revendications précédentes, **caractérisée en ce qu'**elle est pourvue d'un dispositif (60) de rappel élastique de la partie supérieure (3) par rapport à la partie inférieure (2).

10. Brouette (1) à déversement latéral selon l'une des revendications précédentes, **caractérisée en ce que** le dispositif (60) de rappel élastique comprend deux ressorts (61) disposés de chaque côté de la brouette (1), avec une extrémité (62) accrochée à la base (20) et une extrémité (63) accrochée à l'armature (30).

11. Brouette (1) à déversement latéral selon l'une des revendications précédentes, **caractérisée en ce que** la base (20) comprend un arbre longitudinal (21) définissant l'axe de rotation (A1), un essieu (22) supportant les roues (10), et un profilé arqué (23) reliant l'arbre longitudinal (21) à l'essieu (22).

12. Brouette (1) à déversement latéral selon l'une des revendications précédentes, **caractérisée** l'arbre longitudinal (21) et le profilé arqué (23) forment une seule pièce.

13. Brouette (1) à déversement latéral selon l'une des revendications précédentes, **caractérisée en ce que** la base (20) est pourvue de moyens (25) amovibles de blocage transversal des roues (10), de sorte que les roues (10) peuvent être retournées ou que la brouette (1) peut être équipée sélectivement avec différentes roues, en retirant temporairement ces moyens (25).

14. Procédé de mise en oeuvre d'une brouette (1) à déversement latéral selon l'une des revendications précédentes, **caractérisé en ce que** la partie supérieure (3) est inclinable par rapport à la partie inférieure (2), de chaque côté de la brouette (1), selon un angle d'inclinaison (α1) compris entre 0 et au moins 30 degrés :
- dans une configuration stationnaire, où les roues (10) reposent sur le sol ;
- dans une configuration mobile, où les roues (10) roulent sur le sol ; et
- dans une configuration de rangement, où les roues (10) et le réceptacle (40 ; 140 ; 240) reposent au sol.
